# EUROPEAN PATENT SPECIFICATION

(11) **EP 2 985 320 B1**
(45) Date of publication and mention of the grant of the patent: **12.07.2017**
(21) Application number: 15178396.6
(22) Date of filing: 14.10.2011
(51) Int. Cl.: C09D 5/00, C09D 5/08

(54) **COATING COMPOSITIONS WITH ANTICORROSION PROPERTIES**
BESCHICHTUNGSZUSAMMENSETZUNGEN MIT KORROSIONSSCHUTZEIGENSCHAFTEN
COMPOSITIONS DE REVÊTEMENT À PROPRIÉTÉS ANTICORROSION

(30) Priority: 15.10.2010 US 905999
(43) Date of publication of application: 17.02.2016
(62) Divisional of application: 11776972.9
(73) Proprietor: Bunge Amorphic Solutions LLC, White Plains, NY 10606 (US); Universidade Estadual de Campinas, 13083-970 Campinas SP (BR)
(72) Inventor: Foscante, Raymond E., Yorba Linda, CA California 92886 (US); Galembeck, Fernando, 13083-970 Campinas, SP, CEP (BR); Braga, Melissa, 13086-140 Campinas, SP, CEP (BR)
(74) Representative: Eisenführ Speiser

(56) References cited:
- DE-C1- 3 233 092
- GB-A- 2 221 684
- US-A1- 2008 085 965
- US-B2- 7 438 881

## Description

### FIELD OF THE INVENTION

This invention relates to coating compositions having anticorrosion properties and, more specifically, to coating compositions specially formulated to include an amorphous aluminum phosphate corrosion inhibiting pigment and methods for making the same.

### BACKGROUND OF THE INVENTION

Coating compositions formulated to include one or more material to provide anticorrosion properties, used for forming a film layer on the surface of metallic substrates, are known in the art. Such coating compositions make use of materials known to provide some degree of protection against corrosion by one of three different mechanisms.

A first mechanism of corrosion control in coating compositions is one provided by a formulation where a binder composition, that imparts a high degree of moisture and water diffusion resistance to the resulting cured film, is combined with a pigment or solid component that enhances the barrier properties of the film composition, thereby providing a physical barrier to any water passing into the cured coating film to protect the underlying coated metal substrate surface from corrosion. Pigment materials or solid components useful in this regard include aluminum, iron oxide, mica, talc, calcium silicate, and barium sulfate in particle and/or flake form. A second mechanism of corrosion control in coating compositions is one provided by the placement of a desired material adjacent the metallic substrate surface that is selected to sacrificially corrode upon contact with any water and oxygen passing into the cured coating film, thereby sacrificially corroding to cathodically protect and prevent the underlying metallic substrate from corroding. Zinc metal is an example material useful in this regard, and can be provided on the surface of the substrate as a constituent in a coating composition or can be provided separately therefrom.

A third mechanism of corrosion control is one where the coating composition makes use of a material that is corrosion inhibiting, e.g., a corrosion inhibiting pigment, in that such material, upon being contacted with water and oxygen, releases a material that diffuses to the substrate surface and either adsorbs on the substrate to form an impermeable layer or forms a reaction product with the surface of the metallic substrate, thereby preventing it from reacting with water, oxygen, and other corrosive materials. This operates to passivate the substrate surface and thereby protect it from corrosion. Materials known to be useful in this regard include calcium zinc phosphomolybdate, aluminum triphosphate, zinc phosphate, zinc-iron phosphate, strontium zinc phosphosilicate, calcium phosphosilicate, zinc aluminum phosphate, lead-containing materials, and chromate-containing materials.

While anticorrosion coating compositions known in the art provide some degree of protection against unwanted corrosion, such known coating compositions may rely on the use of materials that present a danger/hazard to the environment and/or a health or safety hazard to people and for these reasons the use of such coating compositions have or are being restricted or prohibited altogether. Additionally, such known coating compositions, while providing some degree of corrosion protection, are unable to provide a desired or needed level of corrosion control that is sufficient to meet the demands of certain end-use applications.

It is, therefore, desired that an anticorrosion coating composition be formulated in a manner that provides a desired degree of corrosion control/resistance without the use of materials being regulated or otherwise known to present a hazard/danger to the environment and/or health or safety issues to people. It is desired that such anticorrosion coating compositions be formulated in a manner that provides a desired improved degree of corrosion resistance when compared to known coating compositions, thereby meeting the needs of certain end-use applications. It is further desired that such anticorrosion coating composition be formulated from readily available materials, and/or be made according to a process, that facilitates manufacturing the coating composition in a manner that does not require the use of exotic equipment, that is not unduly labor intensive, and that is economically feasible.

Documents US 2008/085965 A1, GB 2 221 684 A and DE 32 33 092 C1 disclose exemplary conventional coating compositions for corrosion protection, but do not relate to amorphous aluminum phosphates. The US 2008/0085965 A1 discloses a strontium carbonate-modified aluminum phosphate. The GB 2 221 684 A teaches a corrosion protection agent comprising aluminum triphosphate, commercially available as K-White 84 which is a conventional corrosion protection agent containing ions of trimeric phosphoric acid. The DE 32 33 092 C1 teaches a corrosion protection agent comprising more than 50 wt.-% of a basic aluminum phosphate having a weight ratio of Al₂O₃ to P₂O₅ between 1:0.9 and 1:1.2. The prior art document US 7,438,881 B2 discloses conventional anticorrosive pigments of aluminium orthophosphate, their application as anticorrosive pigments in coating agents, as well as a method for their manufacturing; particularly for zinc-free coating compositions.

### SUMMARY OF THE INVENTION

Anticorrosive coating compositions prepared according to principles of the invention comprise a binding polymer and aluminum phosphate dispersed within the binding polymer. The binding polymer can be selected from the group including polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof. The aluminum phosphate comprises amorphous aluminum phosphate. In a preferred embodiment, the aluminum phosphate is amorphous aluminum orthophosphate at the time that the coating composition is applied to a surface of a metallic substrate. The coating composition comprises in the range of from about 1 to 25 percent by weight aluminum phosphate.

In an example embodiment, the amorphous aluminum phosphate is amorphous aluminum hydroxy phosphate comprising hydroxyl functional groups attached to the aluminum atom and/or the phosphate atom. Additionally, the coating composition has a chemical system whereby the hydroxyl functional groups of the amorphous aluminum hydroxy phosphate are bonded with functional groups in the binding polymer. In an example embodiment, the amorphous aluminum phosphate has a chemical structure comprising a polymer backbone, wherein the amorphous aluminum phosphate includes phosphate anion both within and outside of the polymer backbone. Further, the amorphous aluminum phosphate has a water adsorption potential of up to about 25 percent by weight water.

In an example embodiment, the coating composition provides a controlled phosphate delivery, e.g., of phosphate anions, in the range of from about 50 to 500 ppm, and preferably in the range of from about 100 to 200 ppm. In an example embodiment, the coating composition has total solubles content of less than about 1,500 ppm, less than 800 ppm, preferably less than about 400 ppm, and more preferably of from about 100 to 250 ppm. The amorphous aluminum phosphate is preferably substantially free of alkali metals.

Anticorrosion coating compositions are formed by combining starting materials comprising an aluminum source with a phosphorous source and an alkaline solution and reacting the combined starting materials to form a solution comprising an amorphous aluminum phosphate precipitate. The aluminum source can be selected from the group including sodium aluminate, aluminum hydroxide, aluminum sulfate, and combinations thereof, and the phosphorus source can be phosphoric acid or phosphate salt. The step of combining can comprise first mixing aluminum hydroxide with phosphoric acid to form an acidic aluminum phosphate, and then combining the acidic aluminum phosphate with sodium aluminate to form the amorphous aluminum phosphate. Before the step of combining the sodium aluminate, the acidic aluminum phosphate has a P:Al molar ratio that is greater than after the sodium aluminate is added thereto.

In an example embodiment, the amorphous aluminum phosphate is treated to reduce unwanted solubles to the level noted above. The step of treating can comprise contacting the amorphous aluminum phosphate precipitate with an alkaline-earth metal selected to replace a target ion in the amorphous aluminum phosphate. In an example embodiment, the target ion is an alkali metal, e.g., sodium, and the alkaline-earth metal comprises a calcium compound, e.g., calcium hydroxide, Ca(OH)₂. After the step of treating, the precipitate is substantially free of alkali metals.

The treated amorphous aluminum phosphate is dried at a temperature of less than about 300°C, wherein the dried precipitate comprises amorphous aluminum orthophosphate. The amorphous aluminum orthophosphate is mixed with a binding polymer to form the anticorrosion coating composition.

Such anticorrosion coating compositions can be used as a primer coat, a mid-coat, and/or a top-coat coating depending on the particular formulation and/or end use application. The anticorrosion coating composition can be applied to a metal substrate and allowed to dry to form fully-cured film. In the event that the binding polymer is solvent-borne, the amorphous aluminum phosphate in the cured film controls corrosion of the underlying substrate by both adsorbing and/or absorbing water entering the film and providing passivating phosphate anion.

Anticorrosion coating compositions as disclosed herein are formulated in a manner that provides a desired degree of corrosion control/resistance without the use of materials being regulated or otherwise known to present a hazard/danger to the environment and/or health or safety issues to people. Further, such anticorrosion coating compositions are formulated in a manner that provides a desired improved degree of corrosion resistance, when compared to known coating compositions, thereby meeting the needs of certain end-use applications. Such anticorrosion coating compositions are formulated from readily available materials, and are made by processes, that facilitate manufacturing in a manner that does not require the use of exotic equipment, that is not unduly labor intensive, and that is economically feasible.

### DETAILED DESCRIPTION

Anticorrosion coating compositions, and methods for making the same, are disclosed herein. Such anticorrosion coating compositions are formulated to include a desired amount of an amorphous aluminum phosphate corrosion inhibiting pigment that has been specially engineered to provide combined desired features of a controlled release/delivery of an optimum amount of passivating anion, e.g., phosphate anion, to inhibit corrosion, and a controlled amount of total solubles. Together, such features permit the anticorrosion coating composition to provide an improved degree of corrosion resistance to an underlying metallic substrate surface without compromising film and composite integrity and stability, thereby offering such improved corrosion resistance for an extended service life when compared to conventional anticorrosion coating compositions. Amorphous aluminum phosphates used in these anticorrosion coating compositions are also specially designed to have a high level of compatibility with a variety of different binding polymers or binding polymer systems useful for forming such coating composition, thereby providing a high degree of flexibility and choice in formulating the anticorrosion coating composition to meet the needs and conditions of a variety of end-use applications in a number of different end-use industries.

Anticorrosion coating compositions comprise a desired binding polymer that can be selected depending on the different end-use application as well as other factors. Example binding polymers include those currently used for making known anticorrosion coating compositions, and can be selected from the general groups of water-borne polymers, solvent-borne polymers, and combinations thereof. Example water-borne polymers useful for making anticorrosion coating compositions include acrylic and acrylic copolymers, alkyd, epoxy, polyurethane, and silicone, and polysiloxane polymers. Example solvent-borne and/or nonaqueous polymers useful for making anticorrosion coating compositions include acrylic and acrylic copolymers, epoxy, polyurethane, silicone, polysiloxane, polyester, and alkyd. Preferred binding polymers include acrylic copolymer latex, alkyd, polyurethane and epoxy polymers.

In an example embodiment, anticorrosion coating compositions comprise in the range of from about 15 to 75 weight percent, preferably in the range of from about 20 to 60 weight percent, and more preferably in the range of from about 20 to 35 weight percent of the binding polymer based on the total weight of the coating composition. An anticorrosion coating composition comprising less than about 15 percent by weight of the binding polymer may include a greater amount of the corrosion inhibiting pigment than necessary to provide a desired degree of corrosion resistance. An anticorrosion coating composition comprising greater that about 75 percent by weight of the binding polymer may include an amount of the corrosion inhibiting pigment that is insufficient to provide a desired degree of corrosion resistance. While certain amounts of the binding polymer have been provided, it is to be understood that the exact amount of the binding polymer that is used to formulate anticorrosion coating compositions will vary depending on such factors as the type of binding polymer used, the type and/or quantity of inhibiting pigment that is used, and/or the particular end-use application, e.g., the substrate to be coated and the corrosive environment intended for the substrate.

Corrosion inhibiting pigments useful for making anticorrosion coating compositions comprises phosphate-containing compounds. Preferred phosphate-containing compounds are aluminum phosphates. Aluminum phosphates useful in this regard include amorphous aluminum phosphates, crystalline aluminum phosphate, and combinations thereof. Preferred aluminum phosphates are amorphous aluminum phosphates, and most preferred aluminum phosphates are amorphous aluminum orthophosphates. The use of amorphous aluminum phosphates is preferred because amorphous aluminum phosphates have been shown to release an amount of phosphate anion, when diffusing water contacts the pigment in the coating, sufficient to provide passivation to the metal substrate. Further, it has been found that amorphous aluminum phosphate compositions can be prepared having a soluble material content sufficiently low such that solubles do not cause osmotic blistering of a cured film when such film is contacted with water. Accordingly, amorphous aluminum phosphates as used in these anticorrosion coating compositions are specially engineered to both provide a controlled release or delivery of passivating anion, e.g., phosphate anions, to inhibit corrosion, and to have a low total solubles content to avoid osmotic blistering.

In an example embodiment, the amorphous aluminum orthophosphates are amorphous aluminum hydroxy phosphates. Amorphous aluminum hydroxy phosphates are preferred because they provide uniform dispersion properties within the composition and the dispersion remains stable throughout the shelf-life of the formulation. The hydroxyl content of the amorphous aluminum hydroxy phosphate is the unique functional group that provides matrix stability by providing hydrogen bonds with suitable groups of the binding polymer of the formulation, e.g., such as carboxyl groups, amino groups, hydroxyl groups, acid groups and the like. This feature is unique to the amorphous aluminum hydroxy phosphate and is not present in crystalline or other types of amorphous phosphates. By adjusting the Al-OH to Al-OP ratio in the complex it is possible to regulate the release of secondary components incorporated in the material in the co-precipitation process. Such secondary components can include sodium phosphate salts that result from the synthesis reaction.

Anticorrosion coating compositions are formulated to contain a specific amount of the inhibiting pigment calculated to provide a sufficient amount of the passivating anion when placed into end use to inhibit corrosion. In an example embodiment, the anticorrosion coating composition comprises in the range of from about 3 to 25 weight percent, preferably in the range of from about 5 to 15 weight percent, and more preferably in the range of from about 8 to 12 weight percent of the amorphous aluminum phosphate based on the total weight of the coating composition dry film. An anticorrosion coating composition comprising less than about 3 percent by weight of the amorphous aluminum phosphate may contain an amount that is insufficient to provide a desired degree of corrosion resistance. An anticorrosion coating composition comprising greater that about 25 percent by weight of the amorphous aluminum phosphate may include an amount more than necessary to provide a desired degree of corrosion resistance, and such additional amount can operate to impair long-term stability and/or integrity of the cured coating film. While certain amounts of the amorphous aluminum phosphate have been provided, it is to be understood that the exact amount of the amorphous aluminum phosphate that is used to formulate anticorrosion coating compositions will vary depending on such factors as the type and/or quantity of binding polymer used, and/or the particular end-use application, e.g., the substrate to be coated and the corrosive environment intended for the substrate

As briefly noted above, the amorphous aluminum phosphate is specially engineered to provide a controlled release or delivery of one or more passivating anions upon being contacted with water and oxygen, when the coating composition is applied to the surface of a metallic substrate, formed into a cured film, and placed into a corrosive environment. Over time, water/moisture migrates or diffuses into the applied coating film, which water comes into contact with the phosphate component that is available in the film. Such contact with water promotes release/delivery of phosphate anion from the amorphous aluminum phosphate in a controlled manner. These phosphate anions react with iron species of the surface or in the oxide layer of the underlying metallic substrate to form a passivating film thereon and therein that operates to form a barrier protecting the underlying metallic surface from corrosion. A feature of the amorphous aluminum phosphates used to make these anticorrosion coating compositions is that they are engineered to release/deliver a controlled amount of the phosphate anions. Specifically, to release/deliver an amount of the phosphate anions calculated to provide an optimum level of corrosion protection without sacrificing other coating cured-film performance properties that may otherwise compromise the effective film service life.

In an example embodiment, the amorphous aluminum phosphate is engineered to release in the range of from about 50 to 500 ppm, and preferably 100 to 200 ppm of the passivating phosphate anion when present in a cured film placed into an end-use application. The amount of passivating anion to be delivered depends on a number of different factors such as the loading or amount of the amorphous aluminum phosphate used to make the anticorrosion composition, the type of binding polymer that is used, the type of metallic substrate being protected, and the type of corrosion environment present in the end-use application. In a preferred embodiment, where the metallic substrate being protected comprises iron and the corrosion environment comprises water, oxygen, and other corrosive salts, the amorphous aluminum phosphate is engineered to release approximately 160 ppm of the passivating phosphate anion.

An amorphous aluminum phosphate having a controlled release less than about 50 ppm of the passivating anion may not provide a sufficient amount of the passivating anion to inhibit corrosion. An amorphous aluminum phosphate having a controlled release greater than about 500 ppm of the passivating anion, while providing a level sufficient to inhibit corrosion, may provide too much passivating anion that can cause blistering or other unwanted effects in the cured film that can impair its long term integrity and stability, thereby possibly reducing effective service life of the coating.

Anticorrosion coating compositions are engineered having a controlled or minimized level of solubles. As used herein, the term "solubles" and "nonpassivating solubles" are used interchangeably to refer to materials usually produced as a byproduct of making the amorphous aluminum phosphate and can include alkali metals such as sodium, potassium, and lithium, and such anions as sulfates, chlorides and nitrates, and is understood to not include the passivating anions, present in the amorphous aluminum phosphate. In a preferred embodiment, the amount of nonpassivating solubles is zero. A maximum amount of nonpassivating solubles is 250 ppm.

It has been discovered that the presence of such solubles, if left unchecked, can operate to impair the stability and/or integrity of the anticorrosion coating composition and/or the cured film formed therefrom, thereby adversely affecting its intended service life. For example, the presence of such solubles has been found to result in unwanted blistering, delamination from the substrate, under-film corrosion and other types of unwanted film failures when exposed to certain corrosive environments, which film failures operate to expose the underlying metallic substrate surface leaving it unprotected.

In an example embodiment, it is desired that the anticorrosion coating composition comprise less than about one percent (or less than 10,000 ppm) of total solubles , i.e., solubles including phosphate passivating anion, preferably less than about 1,500 ppm total solubles, and more preferably less than about 400 ppm total solubles. In an example embodiment, the anticorrosion coating composition comprises in the range of from about 50 to 800 ppm total solubles, and preferably in the range of from about 100 to 250 ppm total solubles. Anticorrosion coating compositions comprising less than about 1,500 ppm total solubles produce cured films that, when subjected to end use corrosive environments, do not demonstrate blistering or other unwanted film events, thereby operating to enhance effective service life. Accordingly, a feature of anticorrosion coating compositions is that, in addition to providing a controlled release of passivating anion, they are specially engineered to have a reduced amount of total solubles to ensure an intended service life.

### Methods of Making

Generally, the amorphous aluminum phosphate is a phosphate complex in which the nucleating cation is aluminum alone, or aluminum in combination with other multi-valent cations such as calcium, magnesium, barium and the like. The phosphate complex is prepared by dissolving a suitable salt, such as aluminum hydroxide, magnesium hydroxide, calcium hydroxide, aluminum sulfate and the like in phosphoric acid in molar amounts to achieve complete dissolution of the salt. The phosphate complex is precipitated from the acid solution by neutralizing with an alkaline solution or base such as sodium hydroxide, potassium hydroxide, ammonium hydroxide, sodium aluminate, potassium aluminate and the like. The composition of the resulting precipitated solid depends on the ratio of the metal to the phosphate anion. The properties of the precipitated complex, i.e., the amorphous aluminum phosphate, depend on the processing parameters employed during the dissolution of the salt in the acid and on the conditions of the precipitation/neutralization, including choice of neutralizing agent, temperature, order of addition of reactants, rate of addition of reactants, and the degree and duration of agitation.

Thus, amorphous aluminum phosphates included in anticorrosion coating compositions are made as a precipitation product by combining selected starting materials including an aluminum source and a phosphorous source under specific conditions of controlled material delivery, temperature, agitation, and pH. The judicious selection of starting materials and process conditions produces amorphous aluminum phosphates having a material content and chemical structure intentionally created with the purpose of producing the above-noted combined engineered properties of desired passivating anion content, controlled delivery/release of the passivating anion, and desired reduced total solubles.

Aluminum sources useful for forming amorphous aluminum phosphate by precipitation include aluminum salts, such as aluminum chloride, aluminum nitrate, aluminum sulfate and the like. Aluminum sources useful for forming amorphous aluminum phosphate by precipitation also include aluminate compounds, such as sodium aluminate and the like, aluminum hydroxide, or aluminum in metallic form. Phosphorous sources useful for forming amorphous aluminum phosphate by precipitation include phosphoric acid, and salts of phosphorus as orthophosphates or as polyphosphates. An alkaline solution is used to control the pH or neutralize the reaction of the main ingredients. In an example embodiment, the alkaline solution can include ammonium hydroxide, sodium hydroxide, sodium carbonate, and combinations thereof. In an example embodiment, sodium hydroxide is used as the alkaline solution. Useful aluminum sources, phosphate sources, and alkaline sources include those disclosed in Published US Patent Applications 2006/0045831 and 2008/0038556, which are each incorporated herein by reference in their entirety.

Amorphous aluminum phosphate can be made through the selective combination of the materials noted above. The following selected methods of preparation are provided below as examples, and it is to be understood that other methods of preparation other than those specifically disclosed may be used.

### Aluminum Sulfate Method of Making

In an example embodiment, amorphous aluminum phosphate having the above-noted engineered properties is prepared by combining aluminum sulfate, phosphoric acid and sodium hydroxide as disclosed in Published US Patent Application 2006/0045831. The process steps used in this example process generally include: preparing the main reagents, such as a diluted solution of phosphoric acid, a diluted solution of aluminum sulfate, and a diluted solution of sodium hydroxide or ammonium hydroxide; simultaneous and controlled adding of the reagents in a reactor equipped with a sloshing system to keep the homogeneity of the mixture during the process; and controlling, during the addition of the reagents in the reactor, of the temperature and pH (acidity) of the mixture and the reaction time.

The main reagents in this example process can be prepared as follows. A source of phosphorus is fertilizer grade phosphoric acid, from any origin, that has been clarified and discolored. For example, a commercial phosphoric acid containing approximately 54% of P₂O₅ may be chemically treated and/or diluted with treated water resulting in a concentration of approximately 20% P₂O₅. Another reagent useful for this example process is commercial aluminum sulfate, which may be obtained by reaction between alumina (hydrate aluminum oxide) and concentrated sulfuric acid (98% H₂SO₄), that is clarified and stored at an approximate 28% concentration of Al₂O₃. For the reaction to have favorable kinetics, the aluminum sulfate is diluted with water treated at approximately 5.0% of Al₂O₃.

Neutralization of the reaction is carried out with a sodium hydroxide solution, which may be commercially purchased in different concentrations. A concentration of approximately 50% of NaOH may be purchased and diluted. For example, in a first phase of the reaction, when the initial reagents are being mixed, the sodium hydroxide may be used in the concentration of approximately 20% of NaOH. In a second phase of the reaction, to fine tune the product acidity, a sodium hydroxide solution with approximately 5.0% of NaOH may be used. As an alternative neutralizer, ammonium hydroxide or sodium carbonate (soda ash) may be used.

In this example process, a chemical reaction results in the formation of amorphous aluminum orthophosphate or of aluminum orthophosphates (Al₂(HPO₄)₃ or Al(H₂PO₄)₃. The reaction is carried out through the mixture of the three reagents, i.e., phosphoric acid solution, aluminum sulfate solution, and sodium hydroxide solution. The reagents are dosed in a reactor, typically containing a sloshing system, during about a 30 minute period. During the addition of the reagents in the reactor, the pH of the mixture is controlled within a 4.0 to 4.5 range and a reaction temperature, between 35°C and 40°C. The reaction is completed after about 15 minutes of the reagent mixture. In this period, the pH of the mixture may be adjusted to 5.0, with the addition of more diluted sodium hydroxide. In this example process, the temperature is preferably maintained below approximately 40°C. At the end of the reaction, the suspension formed should contain a P:Al molar ratio of between about 0.8:1 to 1.2:1.

As noted above, a feature of the amorphous aluminum phosphate used herein in the anticorrosion coating composition is that it is engineered having a reduced total solubles content. The desired low total solubles content can be achieved during one or more different processing or treatment steps. In an example embodiment, an ion exchange processing step is used to reduce the content of unwanted total solubles in the amorphous aluminum phosphate. The ion exchange process can either be implemented as a step separate from and subsequent to the formation of the precipitate, or it can be conducted during the step of reacting the main reagents *in situ* during formation of the precipitate.

In one example embodiment, the ion exchange process is conducted during in situ formation of the amorphous aluminum phosphate by delivering a desired ion exchange material into the reactor during combination and/or mixing of the main reagents. In an example embodiment, the ion exchange material comprises a compound including an alkaline earth metal that is intended to replace or exchange with an unwanted target ion in the amorphous aluminum phosphate. In an example embodiment, amorphous aluminum phosphate treated in this matter is substantially free of alkali metals.

It has been discovered that the type of ion exchange material selected, in addition to reducing the unwanted presence of solubles, can influence the chemical structure of the amorphous aluminum phosphate, which structure can impact the engineered property of controlled passivating anion delivery. In an example embodiment, where the unwanted ion in the amorphous aluminum phosphate is sodium, it is desired that the ion exchange material comprise Ca(OH)₂. A feature of using Ca(OH)₂ as the ion exchange material is that calcium ions operate to replace sodium ions in the amorphous aluminum phosphate that has the effect of both reducing the amount of unwanted solubles, and causing a change in the chemical structure of the amorphous aluminum phosphate. Specifically, the presence of divalent calcium ion operates to favor and promote chain extension within the amorphous aluminum phosphate, which chain extension is desired because it helps to produce a more consistent particle size by aggregating smaller particles during the nucleation process, thereby leading to less fines in the resulting solid.

Alternatively, the ion exchange process is conducted after formation of the precipitate. This can be done while the precipitate exists as a suspension in the reaction solution within or outside of the reactor, or can be done after the precipitate has been separated from the solution, e.g., by filtration process of the like, or can be done after the filtered precipitate has been washed. As noted above, in a preferred embodiment, Ca(OH)₂ is used as the ion exchange material and the amorphous aluminum phosphate precipitate is placed into contact with the ion exchange material during an ion exchange processing step to remove unwanted solubles therefrom.

After the formation of the amorphous aluminum orthophosphate, the suspension containing around 6.0% to 10.0% of solids, with a maximum approximate temperature of about 45°C, and density of about 1.15 to 1.25 g/cm³, is processed for separation. In an example embodiment, the suspension is pumped to a conventional filter press. In the filter press, the liquid phase (sometimes referred to as the "liquor") is separated from the solid phase (sometimes referred to as the "cake"). The wet cake, containing approximately 35% to 45% of solids is kept in the filter for washing cycle. The filtered concentrate, which is basically a concentrated solution of sodium sulfate, is extracted from the filter and stored for future usage. While the use of a filter press has been disclosed as a separating technique, it is to be understood that other types of separating techniques can be used.

In an example embodiment, washing of the wet cake is performed in the filter itself and in multiple process steps. In a first washing ("displacement washing") the largest part of the filtered substance contaminating the cake is removed. The washing step is performed using treated water over the cake flowing at a preselected flow rate. A second washing step, also with treated water, may be carried out to further reduce, if not eliminate, the contaminants. A third washing step using a slightly alkaline solution may be used to neutralize the cake and to keep its pH in the 7.0 range. The cake may be blown with compressed air for a period of time. Preferably, the solids content of the wet product is between about 35% to 45%. While the use of a particular washing technique and sequence has been disclosed, it is to be understood that other types of washing techniques can be used.

The cake dispersion may be processed in such a way that the filter cake, wet and washed, and containing approximately 35% of solids, is extracted from the press filter by a conveyor belt and transferred to a reactor/disperser. The dispersion of the cake is aided by the addition of a dilute solution of sodium tetrapyrophosphate.

After the dispersion step, the product is then dried, when the aluminum phosphate "mud," with a percentage of solids of between about 30% to 50%, is pumped to the drying unit. In an example embodiment, water removal from the material can be carried out with drying equipment, such as a "turbo dryer" type through an injection of a hot air stream, at a temperature of less than about 300°C, preferably temperatures of from about 40 to 140°C, and more preferably at temperatures of less than about 130°C, through the sample. The final water content of the resulting dried amorphous aluminum phosphate product is between about 10% to 20% by weight water. While the use of a particular drying technique has been disclosed, it is to be understood that other types of drying techniques can be used.

### Sodium Aluminate Method of Making

In another example process, the amorphous aluminum phosphate is prepared by using sodium aluminate as an aluminum source as disclosed in Published US Patent Application 2008/0038556. In one such embodiment, the amorphous aluminum phosphate is prepared by a reaction between phosphoric acid and aluminum hydroxide. The process may further comprise a step of neutralizing that can be carried out by using sodium aluminate. In certain embodiments, the process for making an amorphous aluminum phosphate comprises reacting phosphoric acid, aluminum hydroxide and sodium aluminate. In one embodiment, the process for making an amorphous sodium aluminum phosphate comprises reacting aluminum phosphate and sodium aluminate.

In one embodiment, the reaction comprises two steps. In a first step, phosphoric acid reacts with aluminum hydroxide to produce aluminum phosphate at an acidic pH. In one embodiment, amorphous aluminum phosphate is produced as a water soluble aluminum phosphate. In certain embodiments, the pH of water soluble amorphous aluminum phosphate is less than about 3.5. In certain embodiments, the pH is about 3, 2.5, 2, 1.5 or 1. In certain embodiments, the amorphous aluminum phosphate is produced as a fine solid-liquid dispersion at a higher pH. In one embodiment, the pH is about 3, 4, 5 or 6.

In a second step, the acidic aqueous aluminum phosphate solution or dispersion from the first chemical step is reacted with sodium aluminate. In certain embodiments, the sodium aluminate is used as an aqueous solution at a pH greater than about 10. In one embodiment, the pH of the aqueous sodium aluminate solution is about 11, 12 or 13. In one embodiment, the pH of the aqueous sodium aluminate solution is greater than about 12. The amorphous aluminum sodium phosphate is generated as a solid precipitate. In one embodiment, the solid aluminum-sodium phosphate has a molar ratio of P:Al of about 0.85, and a molar ratio of Na:Al of about 0.50. In one embodiment, the solid amorphous aluminum sodium phosphate has a molar ratio of P:A1 of about 1, and a molar ratio of Na:Al of about 0.76. In certain embodiments, the molecules with other formulation ratios can be obtained by the same procedure.

In one embodiment, the solid hydrated aluminum hydroxide is added to the phosphoric acid in the first chemical step. In another embodiment, the solid hydrated aluminum hydroxide is added to the purified liquid sodium aluminate solution to form a colloidal solution. In another embodiment, the solid hydrated aluminum hydroxide is added directly as solid or solid-liquid suspension in water in the second reaction step. In certain embodiments, the reaction is carried out in a single step.

Sodium aluminates useful for this example process include those that can be obtained by methods known to those skilled in the art. For example, the sodium aluminate can be provided in solution form as a standard chemical product resulting from the first step in the Bayer process in the alumina (Al₂O₃) extraction from Bauxite ore, often called "purified sodium pregnant solution". This liquid aqueous sodium aluminate solution is saturated at ambient temperature and stabilized with sodium hydroxide, NaOH. Its typical compositions are: sodium aluminate, 58 to 65% mass (25 to 28% mass of Al₂O₃) and sodium hydroxide, 3.5 to 5.5% mass (2.5 to 4% mass of free Na₂O). In certain embodiments, it has a molar ratio of Na:Al of from about 1.10 to 2.20 and low impurities (depending on the Bauxite origin: Fe=40 ppm, Heavy metals=20 ppm, and small amount of anions, Cl⁻ and SO₄²⁻). In certain embodiments, the sodium aluminate water solution has a molar ratio of Na:Al of about 1.1 0, 1.15, 1.20, 1.25, 1.30, 1.35, 1.40, 1.45, 1.50, 1.55, 1.60, 1.65, 1.70, 1.75, 1.80, 1.85, 1.90, 1.95, 2.0, 2.05, 2.10, 2.15 or 2.2. The solution color, in certain embodiments, is amber. In certain embodiments, the viscosity of the solution is approximately 100 cP. In certain aspects, the sodium aluminate solution is purified by polishing filtration. In certain embodiments, the sodium aluminate solution is regenerated from solid aluminum hydroxide and sodium hydroxide.

The solid hydrated aluminum hydroxide can be obtained by methods known to one of skill in the art. In one embodiment, aluminum hydroxide is an industrial chemical produced by the Bayer process. The solid hydrated aluminum hydroxide can be obtained from the "purified sodium aluminate pregnant solution" by precipitation which is accomplished via cooling the solution. In one embodiment, the sodium aluminate thus produced has a low level of impurities and a variable amount of humidity (cations about 70 ppm, chlorates about 0.85% mass and sulfates about 0.60% mass (these impurities are determined by the purification level of the "Purified Sodium Aluminate pregnant solution) and the total water, hydration and humidity, about 22.0 to 23.5% mass. In one aspect, both raw materials are standard primary industrial products, just first and second step from the bauxite processing, (commodities) produced in huge amounts by the bauxite processors.

In one embodiment, the chemical reaction results in the formation of aluminum sodium phosphate (Al(OH)₇Na₇(PO₄).1.7H₂O). After the formation of aluminum sodium phosphate, the suspension containing around 6.0% to 10.0% of solids, with a maximum approximate temperature of 45°C, and density in a 1.15 to 1.25 g/cm³ range, is pumped to a conventional filter press.

Like the example process disclosed earlier, this example process also includes one or more processing steps useful for providing the desired low total solubles content. In an example embodiment, such process step comprises an ion exchange process as described above. Such ion exchange step can take place in situ during formation of the amorphous aluminum phosphate precipitate, or subsequent thereto, in the same manner noted above for the example process involving aluminum sulfate. In an example embodiment, calcium hydroxide, Ca(OH)₂, is used as the preferred alkaline earth metal ion exchange material to reduce the unwanted solubles content of the treated amorphous aluminum phosphate, and to facilitate formation of a preferred chemical structure.

The solution containing the amorphous aluminum phosphate precipitate resulting from the reaction of the main reactants can be further processed, e.g., separated, washed and the like, as disclosed above for the aluminum sulfate example process.

In a preferred embodiment, amorphous aluminum phosphate is prepared by the process of using sodium aluminate. It has been discovered that the sodium aluminate process provides for an improved degree of control over the essential characteristics of the amorphous aluminum phosphate that does not otherwise exist in the aluminum sulfate process.

In such preferred embodiment, amorphous hydroxy aluminum phosphate is prepared by reacting a 3 to 1 P:A1 aqueous solution of acidic aluminum phosphate with an aqueous solution of sodium aluminate (NaOH/Al(OH)₃), wherein the acidic aluminum phosphate is prepared by dissolving aluminum hydroxide in aqueous phosphoric acid. The resulting amorphous hydroxy aluminum phosphate has a P:Al ratio of from about 0.5:1 to 1.5:1, and an Na:Al ratio of from about 0.25:1 to 1:1. It is desired that the amorphous hydroxy aluminum phosphate have a P:Al ratio in this range because this provides a suitable range of particle morphology and properties that are compatible with the targeted coating formulation chemistries. Also, the phosphate release rates for such solids in this range provide the desired level of passivation for corrosion prevention. It is desired that the amorphous hydroxy aluminum phosphate have a Na:Al ratio in this range because solubility and release rate are balanced to provide properties of film matrix compatibility and passivation.

Sodium aluminate is added to the acidic aluminum phosphate solution to accomplish the following two objectives. First, it adds more aluminum ion to achieve the above-noted target P:Al ratio. Second, the addition of aluminum ion eventually causes flocculation of amorphous aluminum hydroxy phosphate particles. Sodium hydroxide that is added to the aluminum hydroxide facilitates dissolution of the latter, accelerates reaction with the acidic aluminum phosphate at lower temperatures, and facilitates precipitation of the aluminum phosphate by neutralizing the reaction medium. Depending on the reaction conditions, the sodium may be incorporated into the aluminum hydroxy phosphate structure by capping the oxygen groups attached to the phosphorous atom of the phosphate groups and by combining with phosphate anion in solution to form one of a number of possible soluble sodium phosphate compounds. As noted above, this capping that is facilitated by the presence of the sodium ion can be controlled and converted to chain extension through substitution of the sodium ion with the divalent calcium ion that is provided during the ion exchange process.

This precipitation involves the following competing reactions: (1) aluminum ion from the sodium aluminate reacts with phosphate anion in the acidic aluminum phosphate solution, leading to solid, flocculated insoluble amorphous aluminum hydroxy phosphate; and (2) sodium ion from the sodium aluminate reacts with phosphate anion in the acidic aluminum phosphate solution to form soluble sodium phosphate salts.

The prevalence of either of these reactions depends on specific reaction conditions, notably temperature and the concentration of aluminum available for conversion of acidic aluminum phosphate to solid aluminum hydroxy phosphate. Initially, aluminum cation complexes with phosphate anion and eventually clusters to form particles that flocculate and form insoluble particles. Any sodium phosphate salts formed are soluble and remain in solution. Therefore, slow addition of the sodium aluminate, long agitation, and high temperature will favor the formation of aluminum hydroxy phosphate at the expense of the soluble sodium salts. Thus, controlling the process in this manner reduces the level of unwanted soluble salts present in the final product. Alternatively, rapid addition of sodium aluminate to acidic aluminum phosphate will cause formation of a random mixture of products. Sodium from sodium aluminate needs to go somewhere, so it caps aluminum hydroxy phosphate oxygen groups, it remains occluded as sodium hydroxide, it reacts with available phosphate to form sodium salts, and/or it becomes a counter-ion on the surface of aluminum hydroxy phosphate particles. Controlling the process in this manner produces a high level of unwanted solubles.

After forming the amorphous hydroxy aluminum phosphate precipitate, the precipitate is filtered, washed, wet milled, and spray dried to give a white powder having particle size distributions of D50 from about 0.5 to 8 microns. In an example embodiment, it is desired that the amorphous hydroxy aluminum phosphate have a P:A1 ratio of from about 0.9 to 1, and have a particle size distribution of D50 of about 1 micron and D90 less than about 4 microns. For use in an anticorrosion coating composition it is desired that the amorphous aluminum phosphate have a particle size of less than about 20 microns, and preferably in the range of from about 0.5 to 10 microns, and more preferably in the range of from about 1.0 to 8.0 microns. Particles sizes of less than about 0.5 microns may interfere with the processing of coating formulations and adversely affect film properties by increasing binder resin absorption.

Enhanced control over the essential characteristics of amorphous aluminum phosphate is achieved by manipulating the concentration of the aluminate, which operates to adjust and fine tune the P:Al ratio in the resulting amorphous aluminum phosphate to the desired amount noted above, thereby promoting the formation of an amorphous aluminum phosphate capable of providing a desired controlled delivery of passivating anion. Additionally, the sodium aluminate process of making provides a method for controlling the total solubles content not previously available, e.g., the total solubles content can be controlled by the amount of base incorporated in the aluminate solution, thereby promoting formation of a coating composition having a desired film stability and integrity.

Additionally, the sodium aluminate process facilitates manipulation of other process variables, such as the order of addition, the rate of agitation, the residence time in the reactor, and temperature control, that together or individually operate to permit the tailoring of the desired performance properties of the amorphous aluminum phosphate for use in certain end-use anticorrosion applications. The properties that can be influenced by these variables include the amount of unwanted solubles, the release rate of the passivating anion, the particle size distribution of the amorphous aluminum phosphate, and the amount of the passivating anion. For example, the rate of addition of the aluminate with the amorphous aluminum phosphate, and the residence time of the reaction product within the reactor, can operate to control the degree of disorder as it relates to possible reacting species and possible reaction products as described above.

Amorphous aluminum phosphates prepared as noted above are preferably not subjected to high-temperature drying or other thermal treatment for the purpose of retaining the amorphous structure and avoiding conversion to a crystalline structure. It has been discovered that amorphous aluminum phosphates formed in this manner retain the desired amorphous structure, even after low temperature drying, and this structure provides a distinct benefit/feature for use as a corrosion inhibiting pigment. Such amorphous aluminum phosphates display a markedly increased water adsorption potential or degree of rehydration when compared to crystalline aluminum phosphates, that permits such amorphous aluminum phosphates, once dehydrated by drying, to be rehydrated to contain up to about 25 percent by weight water. This feature is especially useful when the amorphous aluminum phosphate is used with anticorrosion coating compositions comprising a nonwater-borne binding polymer. In such coating compositions the amorphous aluminum phosphates acts, in addition to being an corrosion inhibiting pigment, as a moisture scavenger to both slow water intrusion into the cured film and restrict water diffusion through the cured film. Thus, this water adsorption feature operates to provide another moisture barrier mechanism of corrosion control. This effect has been demonstrated by studying the effect using electroimpedence spectroscopy (EIS).

Amorphous aluminum phosphates, prepared using the aluminate process disclosed above, have a unique chemical structure that allows for the inclusion of secondary ingredients (dopants), and that provides for the controlled release of these ingredients under end-use conditions. Specifically, amorphous aluminum phosphate prepared according to the aluminate process have a chemical structure comprising passivating anion present both in and out of the amorphous aluminum phosphate backbone structure.

As noted above, the aluminate process allows for the careful manipulation of the reagents, which results in the production of a controlled release composition where amorphous aluminum phosphate is in effect a carrier for specific passivating anions, e.g., phosphate salts. This feature enables one to tailor the release rate of passivating phosphate anion by combining the release properties of the base amorphous aluminum phosphate with encapsulated soluble phosphates. Thus, the resulting amorphous aluminum phosphate is not a simple admixture of the two solids but rather is the result of the manufacturing process in which the soluble salts are prepared intimately and simultaneously with the amorphous aluminum phosphate backbone structure. The aluminate process allows for the selective creation of aluminum bridges between ionic clusters, which in turn determine features of product morphology, depending on the P:Al ratio.

Amorphous aluminum phosphate made according to the described methods have a surface area (as measured by BET method) of greater than 20 m²/g, but less than about 80 m²/g. In an example embodiment, the surface area is in the range of between about 20 to 60 m²/g, and more preferably in the range of between about 20 to 30 m²/g.

Anticorrosion coating compositions are prepared by combining a selected binding polymer with the amorphous aluminum phosphate in the amounts described above. The amorphous aluminum phosphate can be provided for composition formulation in the form of a dried powder or can be provided in the form of a slurry or liquid suspension depending on the formulation conditions or preferences.

Table 1 presents an example anticorrosion coating composition formulation in the form of an epoxy-polyamide primer composition prepared in the manner disclosed herein for purposes of reference.

**Table 1- Example Epoxy-Based Anticorrosion Coating Composition**

| **Solvent Based two parts Epoxy Primer Formula** | |
|---|---|
| | |
| **Part 1** | |
| Epoxy resin | 238.1bs |
| Additive | 3lbs |
| Pigment dispersant | 5lbs |
| Solvent 1 | 75lbs |
| Solvent 2 | 20.4lbs |
| Anti-settling additive | 10.2lbs |
| Red iron oxide pigment | 120.4lbs |
| Anticorrosive pigment | 150lbs |
| Extender pigment 1 | 341.3lbs |
| Extender pigment 2 | 120.3lbs |
| Extender pigment 3 | 78.5lbs |
| | |
| Disperse high speed to Hegman 5-6 | |
| | |
| Epoxy resin | 24.8lbs |
| Solvent | 96.3lbs |
| | |

| **Part 2** | |
|---|---|
| Curing agent | 142.2lbs |

In this example, the first epoxy resin is a liquid epoxy resin based on the di-glycidyl ether or bis-phenol A such as EPON 828 (Hexion Chemical), the additive is an polymer that facilitates flow-out in film formation (Cytec), the pigment dispersant is an additive such as Anti-terra U (BykChemie), solvent 1 is an aromatic solvent such as toluene or xylene, solvent 2 is glycol ether, the anti-settling additive is a thixatrope such as Bentone SD, the prime color pigment is red iron oxide, the anticorrosive pigment was the amorphous aluminum phosphate prepared by the sodium aluminate method of making and was provided in the form of a dried powder, extender pigment 1 is barium sulphate, extender pigment 2 is magnesium silicate, extender pigment 3 is mica, the second epoxy resin is the same as the first addition, the third solvent is xylene, and the curing agent is polyamide resin such as EPIKURE 3175 (Hexion). The loading of the amorphous aluminum phosphate was approximately 10 percent by weight based on the total weight of the composition. Additionally, variations of this example formulation were prepared at amorphous aluminum phosphate loading levels of 5 and 15 weight percent.

These example epoxy-based compositions were applied to steel substrates and allowed to form fully-cure films. The film samples were subjected to exposure testing according to ASTM D 5894-05, prohesion testing, and ASTM B 117 salt fog exposure. Evaluation of samples was conducted according to ASTM D 610, D 714, and D 1454. In each of these tests, the epoxy-based samples performed at least as well as or outperformed conventional corrosion coating compositions, e.g., comprising conventional inhibitive pigments such zinc chromate, zinc molybdate, and zinc phosphate.

In addition to the visual tests described above, the epoxy-based example samples were also studied using electro-impedance spectroscopy (EIS). During EIS testing, after 2000 hours of exposure to 5 percent sodium chloride solution, the zinc phosphate and zinc molybdate containing conventional samples showed significant decreases in impedance, indicating that the barrier properties of the film had deteriorated and that the film was saturated with electrolyte compared to control and the corrosion process had initiated. This is a surprising and alarming observation because it means that the process to initiate corrosion has occurred in the presence of these well-established corrosion inhibitive pigments.. The next step in the failure mechanism is the deterioration of the adhesive bonds of the film to the substrate, thereby freeing additional sites for active corrosion to occur.

An unexpected result from the EIS testing was the observation that both the 5 and 15 percent by weight amorphous aluminum phosphate loaded epoxy-based sample demonstrated increased impedance in the epoxy film by an order of magnitude compared to control. This result indicates that the amorphous aluminum phosphate in these samples is enhancing the barrier properties of the epoxy by acting as a water scavenger, removing diffusing water from the matrix and by inhibiting the corrosion reaction.

As water penetrates into the film, it is attracted to and accumulated at the amorphous aluminum phosphate particles present in the film. The water is preferentially adsorbed by the amorphous aluminum phosphate and only after local particle saturation has occurred will any water proceed beyond that location in the film. When this occurs, the next layer of amorphous aluminum phosphate will adsorb the water. This significantly slows the diffusion of water through the film and thereby increases the service life of the film. Further, the presence of water around the re-hydrated, saturated amorphous aluminum phosphate particles results in the release of phosphate anion into the migrating water. Hence, even if the service life is sufficiently long to allow diffusion of water through the film to the substrate, the aqueous solution reaching the substrate will contain passivating phosphate anion thereby preventing corrosion of the steel substrate.

Further, the ability of the amorphous aluminum phosphate to release inhibiting quantities of phosphate anion provides corrosion inhibition at the sites of physical defects or damage in the film. This discovery allows the practical incorporation of amorphous aluminum phosphate as a barrier enhancer in mid-coats and topcoats not simply in primers. Conventional inhibitive pigments have value only in primers because they provide only a passivation mechanism of corrosion control. Amorphous aluminum phosphate and coating compositions comprising the same according to this invention protects from corrosion by a dual mechanism: water adsorption enhancing barrier properties and release of passivating anion.

Table 2 presents an example anticorrosion coating composition formulation in the form of an acrylic latex primer composition prepared in the manner disclosed herein for purposes of reference.

**Table 2 - Example Acrylic Latex Based Anticorrosion Coating Composition**

| **Water-based Primer Formula** | |
|---|---|
| | |
| Water | 111lbs |
| Pigment dispersant - Surfynol CT-131 | 23.4lbs |
| TiO2 color pigment | 104.4lbs |
| Ammonium hydroxide 25% | 1.6lbs |
| Corrosion Inhibitive Pigment | 50lbs |
| Extender Pigment - calcium carbonate | 183.7lbs |
| | |
| Disperse under high sheer 30 minutes | |
| Then mix in the following | |
| Defoamer - Drewplus L-475 | 1.1lbs |
| Coalescent - I Eastman EB | 49.2lbs |
| Latex resin - Aquamac 740 | 506lbs |
| Coalescent II - Texanol ester alcohol | 9lbs |
| Coalescent III - Dowanol DPnB | 14lbs |
| Dispersant/surfactant - Surfynol DF 210 | 2.4lbs |
| Additive | 12.3lbs |
| Plasticizer - Santicizer 160 | 12.3lbs |
| Flash Rust Inhibitor- ammonium benzoate | 3lbs |
| HASE Thickener - Acrysol TT 615 | 4.06lbs |
| Defoamer | 1.4lbs |

In this example, the pigment dispersant is Surfynol CT-131, the corrosion inhibitive pigment is amorphous aluminum phosphate prepared by the sodium aluminate method of making and was provided in the form of powder, the defoamer is Drewplus L-475, coalescent 1 is Eastman EB, coalescent 2 is Dowanol DPnB, coalescent 3 is Texanol ester alcohol, the dispersant/surfactant is Surfynol DF 210, the plasticizer is Santicizer 160, the flash rust inhibitor is ammonium benzoate salt, the HASE thickener is Acrysol TT 615. The loading of the amorphous aluminum phosphate in this formulation was approximately 4.6 percent by weight based on the total weight of the composition.

The acrylic latex based anticorrosion coating composition noted above was applied to a steel substrate (both solvent cleaned cold rolled steel and abrasive blasted steel) as noted above for the epoxy based composition and allowed to cure to form a protective film. The resulting sample was subjected to salt fog and prohesion testing according to ASTM D 5894-05. The tests demonstrated that the acrylic latex based anticorrosion coating composition outperformed conventional anticorrosion coating compositions with or without the use of a flash rust inhibitor by approximately 23 percent. This superior performance without the flash rust inhibitor was surprising and unexpected, and is attributed to the controlled release of phosphate anion at all stages of coating service life, including the application period.

As demonstrated above, embodiments of the invention provide a novel anticorrosion coating composition comprising amorphous aluminum phosphate. While the invention has been described with respect to a limited number of embodiments, the specific features of one embodiment should not be attributed to other embodiments of the invention. No single embodiment is representative of all aspects of the invention. In some embodiments, the compositions or methods may include numerous compounds or steps not mentioned herein. In other embodiments, the compositions or methods do not include, or are substantially free of, any compounds or steps not enumerated herein.

For example, if desired, anticorrosion coating compositions can be prepared comprising one or more elements known to have anticorrosive value in addition to the amorphous aluminum phosphate, e.g., cations such as zinc, calcium, strontium, chromate, borate, barium, magnesium, molybdenum, and combinations thereof. The addition of such other elements can operate to increase or complement the anticorrosive effect of the coating composition.

Additionally, while anticorrosion coating compositions as described herein are engineered to include aluminum phosphate in an amorphous form, it is to be understood that anticorrosion compositions as described herein can comprise aluminum phosphate in its known crystalline forms. For example, such crystalline aluminum phosphate can be present in amounts that do not otherwise adversely impact or impair the engineered anticorrosion mechanisms and/or properties of the coating composition.

Variations and modifications from the described embodiments exist. The method of making the coating compositions and/or amorphous aluminum phosphate is described as comprising a number of acts or steps. These steps or acts may be practiced in any sequence or order unless otherwise indicated. Finally, any number disclosed herein should be construed to mean approximate, regardless of whether the word "about" or "approximately" is used in describing the number. The appended claims intend to cover all those modifications and variations as falling within the scope of the invention.

### EMBODIMENT:

Embodiment 1 An anticorrosive coating composition comprising:
   a binding polymer;
   aluminum phosphate dispersed within the binding polymer, wherein the aluminum phosphate consists essentially of amorphous aluminum phosphate when the coating composition is applied to a metallic substrate;
   wherein the coating composition comprises in the range of from about 1 to 25 percent by weight aluminum phosphate, and wherein the coating composition provides a controlled phosphate delivery in the range of from about 50 to 500 ppm when applied to the metallic substrate and when contacted with water and oxygen.
Embodiment 2 The coating composition as recited in embodiment 1 wherein the coating composition has a total solubles content of less than about 1,500 ppm.
Embodiment 3 The coating composition as recited in embodiment 1 wherein the coating composition has a total solubles content of less than about 400 ppm.
Embodiment 4 The coating composition as recited in embodiment 1 wherein the coating composition has a total solubles content of from about 100 to 250 ppm.
Embodiment 5 The coating composition as recited in embodiment 1 wherein the binding polymer is selected from the group consisting of water-borne and solvent-borne polymers and solvent-less polymers.
Embodiment 6 The coating composition as recited in embodiment 1 wherein the binding polymer is selected from the group consisting of polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof.
Embodiment 7 The coating composition as recited in embodiment 1 wherein the controlled phosphate delivery is between about 100 to 200 ppm.
Embodiment 8 The coating composition as recited in embodiment 1 additionally comprising an element selected from the group consisting of zinc, calcium, strontium, chromate, borate, barium, magnesium, and molybdenum.
Embodiment 9 The coating composition as recited in embodiment 1 wherein the amorphous aluminum phosphate is substantially free of alkali metals.
Embodiment 10 The coating composition as recited in embodiment 1 wherein the aluminum phosphate has a water adsorption potential of up to about 25 percent by weight water.
Embodiment 11 The coating composition as recited in embodiment 1 wherein the amorphous aluminum phosphate is amorphous aluminum hydroxy phosphate comprising hydroxyl functional groups attached to the aluminum atom.
Embodiment 12 The coating composition as recited in embodiment 11 comprising a chemical system whereby the hydroxyl functional groups of the amorphous aluminum hydroxy phosphate are bonded with functional groups in the binding polymer.
Embodiment 13 The coating composition as recited in embodiment 11 wherein the hydroxyl functional groups comprise P-OH.
Embodiment 14 The coating composition as recited in embodiment 1 wherein the amorphous aluminum phosphate comprises phosphate anion, and wherein the controlled delivery ofphosphate comprises delivery of the phosphate anion.
Embodiment 15 The coating composition as recited in embodiment 1 wherein the amorphous aluminum phosphate has a chemical structure comprising a polymer backbone, and wherein the amorphous aluminum phosphate includes phosphate anion both within and outside of the polymer backbone.
Embodiment 16 A primer coating formed from the coating composition recited in embodiment 1, wherein the primer coating is disposed on the metallic substrate.
Embodiment 17 A mid-coat or top-coat of a coating system formed from the coating composition recited in embodiment 1, wherein the mid-coat or top-coat is in contact with the metallic substrate or a primer layer disposed thereon.
Embodiment 18 A system for providing anticorrosion protection comprising a coating composition applied to a metallic substrate and allowed to cure to form a film, the cured coating composition comprising a binding polymer having an amorphous aluminum phosphate corrosion inhibiting pigment dispersed therein, wherein the amorphous aluminum phosphate comprises amorphous aluminum hydroxyl phosphate, the coating composition comprising in the range of from about 1 to 25 percent by weight of the amorphous aluminum phosphate based on the total weight of the coating composition, the coating composition having a controlled delivery of phosphate anion of less than about 500 ppm.
Embodiment 19 The system as recited in embodiment 18 wherein the corrosion inhibiting pigment consists of amorphous aluminum phosphate.
Embodiment 20 The system as recited in embodiment 18 comprising a passivating film interposed between the coating composition and a surface of the metallic substrate, wherein the passivating film is a reaction product formed from sodium phosphate salts present in the amorphous aluminum phosphate and the metallic substrate.
Embodiment 21 The system as recited in embodiment 18 wherein the binding polymer comprises epoxy and the amorphous aluminum phosphate absorbs and/or adsorbs up to about 25 percent by weight water that enters the cured firm.
Embodiment 22 The system as recited in embodiment 18 wherein the coating composition has a total solubles content of less than about 1,500 ppm.
Embodiment 23 The system as recited in embodiment 18 wherein the coating composition has a total solubles content of less than about 800 ppm.
Embodiment 24 The system as recited in embodiment 18 wherein the coating composition has a total solubles content of from about 100 to 250 ppm.
Embodiment 25 The system as recited in embodiment 18 wherein the amorphous aluminum phosphate comprises a chemical structure including sodium incorporated therein.
Embodiment 26 The system as recited in embodiment 18 wherein the amorphous aluminum phosphate comprises a chemical structure including calcium incorporated therein.
Embodiment 27 The system as recited in embodiment 18 wherein hydroxyl groups from the amorphous aluminum hydroxy phosphate are bonded to suitable groups of the binding polymer to provide matrix stability and moisture barrier enhancement to the coating composition.
Embodiment 28 The system as recited in embodiment 18 wherein the amorphous aluminum phosphate has a chemical structure comprising a polymer backbone, and wherein the amorphous aluminum phosphate includes phosphate anion both within and outside of the polymer backbone.
Embodiment 29 The system as recited in embodiment 18 wherein the binding polymer is selected from the group consisting of polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof.
Embodiment 30 The system as recited in embodiment 18 wherein the coating composition comprises 5 to 15 percent by weight of the amorphous aluminum phosphate based on the total weight of the coating composition, and has a total solubles content of less than about 400 ppm.
Embodiment 31 The system as recited in embodiment 18 wherein the amorphous aluminum phosphate is an orthophosphate.
Embodiment 32 The system as recited in embodiment 18 wherein the amorphous aluminum phosphate is substantially free of alkali metals.
Embodiment 33 The system as recited in embodiment 18 wherein the amorphous aluminum phosphate has a water adsorption potential of up to about 25 percent by weight water.
Embodiment 34 The system as recited in embodiment 18 wherein the coating composition is a primer coating disposed on the metallic substrate.
Embodiment 35 The system as recited in embodiment 18 wherein the coating composition is a mid-coat or top-coat coating that disposed on the metallic substrate or a primer layer disposed on the metallic substrate.
Embodiment 36 The system as recited in embodiment 18 wherein the coating composition has a controlled delivery of phosphate anion of between 100 to 200 ppm.
Embodiment 37 A method for making an anticorrosion coating composition comprising the steps of:
   preparing an amorphous aluminum phosphate corrosion inhibiting pigment by combining starting materials comprising an aluminum source with a phosphorous source and an alkaline solution and reacting the combined starting materials to form a solution comprising an amorphous aluminum phosphate precipitate;
   treating the amorphous aluminum phosphate precipitate to reduce total solubles to less than about 1,500 ppm;
   drying the precipitate at a temperature of less than about 300°C, wherein the dried precipitate comprises amorphous aluminum orthophosphate; and
   mixing the amorphous aluminum orthophosphate with a binding polymer to form the coating composition, wherein the coating composition comprises less than about 25 percent by weight of the of the total weight of the coating composition.
Embodiment 38 The method as recited in embodiment 37 wherein the step of treating comprises contacting the amorphous aluminum phosphate precipitate with an alkaline earth metal selected to replace a target ion in the amorphous aluminum phosphate.
Embodiment 39 The method as recited in embodiment 38 wherein the target ion is an alkali metal.
Embodiment 40 The method as recited in embodiment 39 wherein the target ion is sodium and the alkaline earth metal comprises a calcium compound.
Embodiment 41 The method as recited in embodiment 40 wherein the calcium compound is calcium hydroxide, Ca(OH)₂.
Embodiment 42 The method as recited in embodiment 37 wherein after the step of treating, the precipitate is substantially free of alkali metals.
Embodiment 43 The method as recited in embodiment 37 wherein the aluminum source is selected from the group consisting of sodium aluminate, aluminum hydroxide, aluminum sulfate, and combinations thereof.
Embodiment 44 The method as recited in embodiment 37 wherein the phosphorus source is phosphoric acid.
Embodiment 45 The method as recited in embodiment 37 wherein the step of combining comprises first mixing aluminum hydroxide with phosphoric acid to form an acidic aluminum phosphate, and then combining the acidic aluminum phosphate with sodium aluminate to form the amorphous aluminum phosphate.
Embodiment 46 The method as recited in embodiment 45 wherein before the step of combining the sodium aluminate, the acidic aluminum phosphate has a P:Al molar ratio that is greater than after the sodium aluminate is added thereto.
Embodiment 47 The method as recited in embodiment 37 wherein after the step of treating, the amorphous aluminum phosphate precipitate has a total solubles content of less than about 400 ppm.
Embodiment 48 The method as recited in embodiment 47 wherein the coating composition has a controlled delivery of phosphate anion of between 50 to 500 ppm.
Embodiment 49 The method as recited in embodiment 37 wherein the amorphous aluminum orthophosphate is an amorphous aluminum hydroxy orthophosphate, and wherein the amorphous aluminum hydroxy orthophosphate has a chemical structure comprising a polymer backbone, and wherein the amorphous aluminum hydroxy orthophosphate includes passivating phosphate anions both within and outside of the polymer backbone.
Embodiment 50 The method as recited in embodiment 37 wherein after the step of drying, the amorphous aluminum orthophosphate has a water adsorption potential of up to about 25 percent by weight water.
Embodiment 51 The method as recited in embodiment 37 further comprising the step of applying the anticorrosion coating composition to a metal substrate and allowing the applied coating composition to form a fully cured film, wherein the binding polymer is solvent-borne, and wherein the amorphous aluminum orthophosphate in the cured film controls corrosion of the underlying substrate by both adsorbing and/or absorbing water entering the film and providing passivating phosphate anion.
Embodiment 52 The method as recited in embodiment 51 wherein the binding polymer comprises epoxy.
Embodiment 53 A primer coating formed from the anticorrosion coating composition prepared according to the method recited in embodiment 37, wherein the primer is disposed on a metallic substrate.
Embodiment 54 A mid-coat or top-coat coating formed from the anticorrosion coating composition prepared according to the method recited in embodiment 37, wherein the mid-coat or top-coat is disposed on a metallic substrate or on a primer layer that is disposed on the metallic substrate.
Embodiment 55 A method for making an anticorrosion coating composition comprising the steps of:
   preparing an amorphous aluminum orthophosphate corrosion inhibiting pigment by combining starting materials comprising sodium aluminate, phosphoric acid, and sodium hydroxide to form a solution comprising an aluminum orthophosphate precipitate;
   treating the precipitate to reduce the level of total solubles to less than 1,500 ppm;
   drying the precipitate at a temperature of less than about 300°C, wherein the dried precipitate comprises amorphous aluminum orthophosphate;
   sizing the dried amorphous aluminum orthophosphate to have a particle size in the range of from about 0.01 to 25 microns; and
   mixing the amorphous aluminum orthophosphate with a binding polymer to form the coating composition, wherein the coating composition comprises less than about 25 percent by weight of the of the total weight of the coating composition.
Embodiment 56 The method as recited in embodiment 55 wherein the binding polymer comprises a solvent-borne polymer and the coating composition is applied to a metallic substrate and allowed to dry to form a fully-cured film, wherein the amorphous aluminum orthophosphate controls corrosion by both absorbing and/or adsorbing water that enters the film and producing passivating anion.
Embodiment 57 The method as recited in embodiment 55 wherein the binding polymer comprises an epoxy polymer.
Embodiment 58 The method as recited in embodiment 55 wherein the step of treating comprises conducting an ion exchange process using an alkaline earth metal.
Embodiment 59 The method as recited in embodiment 55 wherein the alkaline earth metal is a calcium compound.
Embodiment 60 The method as recited in embodiment 55 wherein after the step of treating, the precipitate is substantially free of alkali metal.
Embodiment 61 The method as recited in embodiment 55 wherein during the step of combining, reducing the ratio of P:Al by further adding aluminum hydroxide to the starting materials.
Embodiment 62 The method as recited in embodiment 61 wherein during the step of combining, reducing the amount of total solubles produced by adding additional sodium hydroxide.
Embodiment 63 The method as recited in embodiment 55 wherein during the step of combining, the precipitate aluminum phosphate is amorphous aluminum hydroxy orthophosphate.
Embodiment 64 The method as recited in embodiment 55 wherein during the step of mixing, the amorphous aluminum phosphate is an orthophosphate.
Embodiment 65 The method as recited in embodiment 55 wherein the amorphous aluminum orthophosphate comprises one or more alkali metals incorporated into its chemical structure.
Embodiment 66 The method as recited in embodiment 55 wherein during the step of combining, the sodium aluminate is added slowly over a period of time of from about 60 seconds to one hour.
Embodiment 67 The method as recited in embodiment 55 wherein during the step of combining, the starting materials are mixed together for a period of time of from about 15 to 60 minutes.
Embodiment 68 The method as recited in embodiment 55 wherein during the step of combining, the starting materials are subjected to a temperature of from about 25 to 200°C.
Embodiment 69 The method as recited in embodiment 55 wherein during the step of combining, the sodium aluminate is added slowly over a period of time of from about 10 seconds to 30 minutes, and are mixed together for a period of time of from about one to 30 minutes, are subjected to a temperature of from about 25 to 200 °C.
Embodiment 70 The method as recited in embodiment 55 wherein during the step of mixing, hydroxyl groups of the amorphous aluminum orthophosphate combine with suitable functional groups of the binding polymer to form a stable matrix comprising the amorphous aluminum orthophosphate uniformly dispersed within the binding polymer.
Embodiment 71 The method as recited in embodiment 55 wherein during the step of mixing, the binding polymer is selected from the group consisting of polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof.
Embodiment 72 The method as recited in embodiment 55 wherein the step of combining comprises first forming an acidic aluminum orthophosphate and then adding sodium aluminate to the acidic aluminum orthophosphate to reduce the molar ratio of P:Al.
Embodiment 73 The method as recited in embodiment 55 wherein the amorphous aluminum phosphate is an amorphous aluminum hydroxy orthophosphate, and wherein the amorphous aluminum hydroxy phosphate has a chemical structure comprising a polymeric backbone, and wherein the amorphous aluminum hydroxy orthophosphate includes passivating phosphate anions both within and outside of the polymer backbone.
Embodiment 74 A method for making an anticorrosion coating composition comprising the steps of:
   preparing an amorphous aluminum orthophosphate corrosion inhibiting pigment by combining sodium aluminate, phosphoric acid, and sodium hydroxide, and reacting the combined starting materials while treating the reaction product to form a solution comprising an aluminum orthophosphate precipitate;
   drying the precipitate at a temperature of less than about 300°C, wherein the dried precipitate comprises amorphous aluminum orthophosphate;
   sizing the dried amorphous aluminum orthophosphate to have a particle size in the range of from about 0.01 to 25 microns; and
   mixing the amorphous aluminum orthophosphate with a binding polymer to form the coating composition, wherein the coating composition comprises less than about 25 percent by weight of the of the total weight of the coating composition.
Embodiment 75 The method as recited in embodiment 72 wherein the step of treating comprises removing total solubles from the precipitate.
Embodiment 76 The method as recited in embodiment 75 wherein the step of treating comprises performing an ion exchange process using an alkali earth metal to remove a target ion within the precipitate.
Embodiment 77 The method as recited in embodiment 76 wherein the alkaline earth metal is a calcium compound and the target ion comprises an alkali metal.
Embodiment 78 The method as recited in embodiment 74 wherein during the step of combining, the aluminum orthophosphate precipitate is amorphous aluminum hydroxy orthophosphate.
Embodiment 79 The method as recited in embodiment 74 wherein after the step of treating, the precipitate is substantially free of alkali metal.
Embodiment 80 The method as recited in embodiment 74 wherein during the step of preparing, an acidic aluminum orthophosphate is first prepared and then the sodium aluminate is added thereto to reduce the molar ratio of P:Al.
Embodiment 81 The method as recited in embodiment 74 wherein during the step of combining, the sodium aluminate is added slowly over a period of time of from about 60 seconds to 30 minutes.
Embodiment 82 The method as recited in embodiment 74 wherein during the step of combining, the starting materials are mixed together for a period of time of from about 15 to 30 minutes.
Embodiment 83 The method as recited in embodiment 74 wherein during the step of combining, the starting materials are subjected to a temperature of from about 25 to 200 °C.
Embodiment 84 The method as recited in embodiment 74 wherein during the step of combining, the sodium aluminate is added slowly over a period of time of from about 10 seconds to 30 minutes, and are mixed together for a period of time of from about one to 30 minutes, are subjected to a temperature of from about 25 to 200 °C.
Embodiment 85 The method as recited in embodiment 74 wherein during the step of mixing, hydroxyl groups of the amorphous aluminum orthophosphate combined with suitable functional groups of the binding polymer to form a stable matrix comprising the amorphous aluminum orthophosphate uniformly dispersed within the binding polymer.
Embodiment 86 The method as recited in embodiment 74 wherein during the step of mixing, the binding polymer is selected from the group consisting of polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof.
Embodiment 87 The method as recited in embodiment 74 wherein the amorphous aluminum orthophosphate has a chemical structure comprising a polymer backbone, and wherein the amorphous aluminum phosphate includes passivating phosphate anions both within and outside of the polymer backbone.

## Claims

1. A primer coat, a mid-coat and/or a top-coat coating comprising or consisting of an anticorrosive coating composition comprising:
a binding polymer;
a corrosion-inhibiting pigment comprising aluminum phosphate dispersed within the binding polymer, wherein the aluminum phosphate comprises amorphous aluminum phosphate;
wherein the coating composition comprises in the range of from about 1 to 25 percent by weight aluminum phosphate,
and wherein the coating composition provides a controlled phosphate release in the range of from about 50 to 500 ppm, preferably between about 100 to 200 ppm, when applied to the metallic substrate and when contacted with water and oxygen.

2. The primer coat, a mid-coat and/or a top-coat coating composition as recited in claim 1 wherein the coating composition has a total soluble content of less than about 1,500 ppm, preferably of less than about 400 ppm more preferably from about 100 to 250 ppm.

3. The primer coat, a mid-coat and/or a top-coat coating composition as recited in claim 1 wherein the binding polymer is selected from the group consisting of water-borne and solvent-borne polymers and solvent-less polymers, preferably from the group consisting of polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof.

4. The primer coat, a mid-coat and/or a top-coat coating composition as recited in claim 1 additionally comprising an element selected from the group consisting of zinc, calcium, strontium, chromate, borate, barium, magnesium, and molybdenum.

5. The primer coat, a mid-coat and/or a top-coat coating composition as recited in claim 1 wherein the aluminum phosphate has a water adsorption potential of up to about 25 percent by weight water.

6. The primer coat, a mid-coat and/or a top-coat coating composition as recited in claim 1 wherein the amorphous aluminum phosphate is amorphous aluminum hydroxy phosphate comprising hydroxyl functional groups attached to the aluminum atom, wherein preferably the hydroxyl functional groups comprise P-OH.

7. The primer coat, a mid-coat and/or a top-coat coating composition as recited in claim 1 wherein the amorphous aluminum phosphate has a chemical structure comprising a polymer backbone, and wherein the amorphous aluminum phosphate includes phosphate anion both within and outside of the polymer backbone.

8. Use of the primer coat, a mid-coat and/or a top-coat coating composition as defined in any one of the claims 1 to 7, in a system for providing anticorrosion protection comprising the primer coat, a mid-coat and/or a top-coat coating composition applied to a metallic substrate and allowed to cure to form a film.

9. Use of the primer coat, a mid-coat and/or a top-coat coating composition in the system as recited in claim 8 comprising a passivating film interposed between the coating composition and a surface of the metallic substrate, wherein the passivating film is a reaction product formed from sodium phosphate salts present in the amorphous aluminum phosphate and the metallic substrate.

10. Use of the primer coat, a mid-coat and/or a top-coat coating composition in the system as recited in claim 8 wherein hydroxyl groups from the amorphous aluminum hydroxy phosphate are bonded to suitable groups of the binding polymer to provide matrix stability and moisture barrier enhancement to the coating composition, wherein the binding polymer is preferably selected from the group consisting of polyurethanes, polyesters, solvent-based epoxies, solventless epoxies, water-borne epoxies, epoxy copolymers, acrylics, acrylic copolymers, silicones, silicone copolymers, polysiloxanes, polysiloxane copolymers, alkyds and combinations thereof.

11. Use of the primer coat, a mid-coat and/or a top-coat coating composition in the system as recited in claim 8 wherein the amorphous aluminum phosphate is an orthophosphate.

12. Use of the primer coat, a mid-coat and/or a top-coat coating composition in the system as recited in claim 8 wherein the coating composition is a primer coating disposed on the metallic substrate or a mid-coat or top-coat coating that disposed on the metallic substrate or a primer layer disposed on the metallic substrate.

13. The primer coat, a mid-coat and/or a top-coat coating composition as recited in claim 1, or an anticorrosive coating composition as defined in claim 1, wherein the amorphous aluminum phosphate have a particle size of less than about 20 microns, and preferably in the range of from about 0.5 to 10 microns, and more preferably in the range of from about 1.0 to 8.0 microns.

14. The primer coat, a mid-coat and/or a top-coat coating composition as recited in claim 1, or an anticorrosive coating composition as defined in claim 1, wherein the amorphous aluminum phosphate is amorphous aluminum hydroxy phosphate having particle size distributions of D50 from about 0.5 to 8 microns, preferably wherein the amorphous hydroxy aluminum phosphate have a particle size distribution of D50 of about 1 micron and D90 less than about 4 microns and have P:Al ratio of from about 0.9 to 1.

15. The primer coat, a mid-coat and/or a top-coat coating composition as recited in claim 1, or an anticorrosive coating composition as defined in claim 1, wherein the amorphous aluminum phosphate have a surface area (as measured by BET method) of greater than 20 m²/g, but less than about 80 m²/g, preferably wherein the surface area is in the range of between about 20 to 60 m²/g, and more preferably in the range of between about 20 to 30 m²/g.

16. An anticorrosive coating composition comprising:
a binding polymer selected from the group consisting of solvent-borne polymers, water-borne polymers and combinations thereof;
an aluminum orthophosphate corrosion inhibiting pigment in the form of particles dispersed within the binding polymer, the aluminum orthophosphate comprising amorphous aluminum orthophosphate formed by combining phosphoric acid, aluminum hydroxide and sodium aluminate and having a BET surface area between about 20 to 60 m²/g;
wherein the coating composition comprises in the range of from about 1 to 25 percent by weight aluminum orthophosphate, wherein the coating composition provides a controlled delivery of phosphate anions in the range of from about 50 to 500 ppm when applied to a metallic substrate and when contacted with water and oxygen, wherein the phosphate anions react with an iron species of the metallic substrate to form a passivating film thereon that protects the metallic substrate from corrosion, wherein the coating composition has a total solubles content of less than about 1,500 ppm, and wherein the coating composition further includes a material comprising zinc.

## Patentansprüche

1. Eine Primer-Beschichtung-, Zwischenlack-Beschichtung- und/oder Decklack-Beschichtung enthaltend eine oder bestehend aus einer Korrosionsschutz-Beschichtungszusammensetzung, umfassend:
ein Bindemittel-Polymer;
ein Korrosionsschutz-Pigment umfassend im Bindemittel-Polymer dispergiertes Aluminiumphosphat, wobei das Aluminiumphosphat amorphes Aluminiumphosphat enthält;
wobei Beschichtungszusammensetzung Aluminiumphosphat im Bereich von etwa 1 bis 25 Gewichtsprozent enthält,
und wobei die Beschichtungszusammensetzung eine kontrollierte Phosphat-Freisetzung im Bereich von etwa 50 bis 500 ppm, vorzugsweise zwischen etwa 100 bis 200 ppm, liefert, wenn sie auf das Metallsubstrat aufgebracht ist und mit Wasser und Sauerstoff in Kontakt tritt.

2. Primer-Beschichtung-, Zwischenlack-Beschichtung- und/oder Decklack-Beschichtung-Zusammensetzung wie in Anspruch 1 angegeben, wobei die Beschichtungszusammensetzung einen löslichen Gesamtgehalt von weniger als etwa 1.500 ppm, vorzugsweise von weniger als etwa 400 ppm, besonders bevorzugt von etwa 100 bis 250 ppm, aufweist.

3. Primer-Beschichtung-, Zwischenlack-Beschichtung- und/oder Decklack-Beschichtung-Zusammensetzung wie in Anspruch 1 angegeben, wobei das Bindemittel-Polymer ausgewählt ist aus der Gruppe bestehend aus wasserverdünnbaren und Lösungsmittel-basierten Polymeren und Lösungsmittel-freien Polymeren, vorzugsweise aus der Gruppe bestehend aus Polyurethanen, Polyestern, Lösungsmittel-basierten Epoxidharzen, lösungsmittelfreien Epoxidharzen, wasserverdünnbaren Epoxidharzen, Epoxid-Copolymeren, Acrylharzen, Acryl-Copolymeren, Silikonen, Silikon-Copolymeren, Polysiloxanen, Polysiloxan-Copolymeren, Alkydharzen und Kombinationen davon.

4. Primer-Beschichtung-, Zwischenlack-Beschichtung- und/oder Decklack-Beschichtung-Zusammensetzung wie in Anspruch 1 angegeben, zusätzlich enthaltend ein Element ausgewählt aus der Gruppe bestehend aus Zink, Calcium, Strontium, Chromat, Borat, Barium, Magnesium, und Molybdän.

5. Primer-Beschichtung-, Zwischenlack-Beschichtung- und/oder Decklack-Beschichtung-Zusammensetzung Beschichtungszusammensetzung wie in Anspruch 1 angegeben, wobei das Aluminiumphosphat ein WasseradsorptionsVermögen von bis zu etwa 25 Gewichtsprozent Wasser aufweist.

6. Primer-Beschichtung-, Zwischenlack-Beschichtung- und/oder Decklack-Beschichtung-Zusammensetzung wie in Anspruch 1 angegeben, wobei das amorphe Aluminiumphosphat amorphes Aluminiumhydroxyphosphat ist, das an das Aluminiumatom gebundene funktionelle Gruppen aufweist, wobei vorzugsweise die Hydroxy-funktionellen Gruppen P-OH umfassen.

7. Primer-Beschichtung-, Zwischenlack-Beschichtung- und/oder Decklack-Beschichtung-Zusammensetzung wie in Anspruch 1 angegeben, wobei das amorphe Aluminiumphosphat eine chemische Struktur aufweist, umfassend ein Polymergerüst, und wobei das amorphe Aluminiumphosphat Phosphatanion sowohl innerhalb und außerhalb des Polymergerüsts enthält.

8. Verwendung der Primer-Beschichtung-, Zwischenlack-Beschichtung- und/oder Decklack-Beschichtung-Zusammensetzung wie in einem der Ansprüche 1 bis 7 definiert, in einem System zur Bereitstellung von Korrosionsschutz, umfassend die Primer-Beschichtung-, Zwischenlack-Beschichtung- und/oder Decklack-Beschichtung-Zusammensetzung, die auf einem metallischen Substrat aufgebracht ist und die man aushärten lässt, um einen Film zu bilden.

9. Verwendung der Primer-Beschichtung-, Zwischenlack-Beschichtung- und/oder Decklack-Beschichtung-Zusammensetzung im System wie in Anspruch 8 angegeben, umfassend einen passivierenden Film, angeordnet zwischen der Beschichtungszusammensetzung und einer Oberfläche des metallischen Substrats, wobei der passivierende Film ein Reaktionsprodukt ist, das aus im amorphen Aluminiumphosphat vorhandenen Natriumphosphatsalzen und dem metallischen Substrat gebildet wird.

10. Verwendung der Primer-Beschichtung-, Zwischenlack-Beschichtung- und/oder Decklack-Beschichtung-Zusammensetzung im System wie in Anspruch 8 angegeben, wobei die Hydroxylgruppen aus dem amorphen Aluminiumphosphat an geeignete Gruppen des Bindemittel-Polymers gebunden sind, um der Beschichtungszusammensetzung Matrixstabilität und Feuchtigkeitsbarriereverbesserung zu verleihen, wobei das Bindemittel-Polymer vorzugsweise ausgewählt ist aus der Gruppe bestehend aus Polyurethanen, Polyestern, Lösungsmittel-basierten Epoxidharzen, lösungsmittelfreien Epoxidharzen, wasserverdünnbaren Epoxidharzen, Epoxid-Copolymeren, Acrylharzen, Acryl-Copolymeren, Silikonen, Silikon-Copolymeren, Polysiloxanen, Polysiloxan-Copolymeren, Alkydharzen und Kombinationen davon.

11. Verwendung der Primer-Beschichtung-, Zwischenlack-Beschichtung- und/oder Decklack-Beschichtung-Zusammensetzung im System wie in Anspruch 8 angegeben, wobei das amorphe Aluminiumphosphat ein Orthophosphat ist.

12. Verwendung der Primer-Beschichtung-, Zwischenlack-Beschichtung- und/oder Decklack-Beschichtung-Zusammensetzung im System wie in Anspruch 8 angegeben, wobei die Beschichtungszusammensetzung eine Primer-Beschichtung ist, die auf dem metallischen Substrat oder auf einer auf dem metallischen Substrat aufgebrachten Zwischenlack- oder Decklack-Beschichtung oder auf einer auf dem metallischen Substrat aufgebrachten Grundierungsschicht aufgebracht ist.

13. Primer-Beschichtung-, Zwischenlackbeschichtung- und/oder Decklackbeschichtung-Zusammensetzung wie in Anspruch 1 angegeben, oder eine Korrosionsschutz-Beschichtungszusammensetzung wie in Anspruch 1 definiert, wobei das amorphe Aluminiumphosphat eine Partikelgröße von weniger als etwa 20 Mikrometer, und vorzugsweise im Bereich von etwa 0,5 bis 10 Mikrometer, und weiter bevorzugt im Bereich von etwa 1,0 bis 8 Mikrometer, aufweist.

14. Primer-Beschichtung-, Zwischenlackbeschichtung- und/oder Decklackbeschichtung-Zusammensetzung wie in Anspruch 1 angegeben, oder eine Korrosionsschutz-Beschichtungszusammensetzung wie in Anspruch 1 definiert, wobei das amorphe Aluminiumphosphat amorphes Aluminiumhydroxyphosphat ist, das eine Partikelgrößenverteilung von D50 von etwa 0,5 bis 8 Mikrometer aufweist, vorzugsweise wobei das amorphe Aluminiumhydroxyphosphat eine Partikelgrößenverteilung von D50 von etwa 1 Mikrometer und D90 von weniger als etwa 4 Mikrometer aufweist und ein P:Al-Verhältnis von etwa 0,9 bis 1 aufweist.

15. Primer-Beschichtung-, Zwischenlackbeschichtung- und/oder Decklackbeschichtung-Zusammensetzung wie in Anspruch 1 angegeben, oder eine Korrosionsschutz-Beschichtungszusammensetzung wie in Anspruch 1 definiert, wobei das amorphe Aluminiumphosphat eine Oberfläche (wie nach der BET-Methode gemessen) von größer als 20 m²/g aber weniger als 80 m²/g aufweist, vorzugsweise wobei die Oberfläche im Bereich von zwischen etwa 20 bis 60 m²/g liegt, und weiter bevorzugt im Bereich von zwischen etwa 20 bis 30 m²/g.

16. Eine Korrosionsschutz-Beschichtungszusammensetzung, umfassend:
ein Bindemittel-Polymer ausgewählt aus der Gruppe bestehend aus Lösungsmittel-basierten Polymeren, wasserverdünnbaren Polymeren und Kombinationen davon;
ein Aluminiumorthophosphat-Korrosionsschutz-Pigment in der Form von im Bindemittel-Polymer feinverteilten Partikeln, wobei das Aluminiumorthophosphat ein amorphes Aluminiumorthophosphat enthält, das durch Kombinieren von Phosphorsäure, Aluminiumhydroxid und Natriumaluminat gebildet wird und eine BET-Oberfläche zwischen etwa 20 bis 60 m²/g aufweist;
wobei die Beschichtungszusammensetzung im Bereich von etwa 1 bis 25 Gewichtsprozent an Aluminiumorthophosphat enthält, wobei die Beschichtungszusammensetzung eine kontrollierte Freisetzung von Phosphatanionen im Bereich von etwa 50 bis 500 ppm liefert, wenn sie auf ein Metallsubstrat aufgebracht ist und mit Wasser und Sauerstoff in Kontakt tritt, wobei die Phosphatanionen mit einer Eisen-Spezies des metallischen Substrats reagieren, um darauf einen passivierenden Film zu bilden, der das metallische Substrat vor Korrosion schützt, wobei die Beschichtungszusammensetzung einen löslichen Gesamtgehalt von weniger als etwa 1.500 ppm aufweist, und wobei die Beschichtungszusammensetzung weiterhin ein Zink enthaltendes Material beinhaltet.

## Revendications

1. Revêtement de couche primaire, de couche intermédiaire et/ou de couche de finition comprenant ou consistant en une composition de revêtement anticorrosion comprenant :
un polymère liant ;
un pigment inhibant la corrosion comprenant du phosphate d'aluminium dispersé dans le polymère liant, dans lequel le phosphate d'aluminium comprend du phosphate d'aluminium amorphe ;
dans lequel la composition de revêtement comprend dans la plage allant d'environ 1 à 25 pour cent en poids de phosphate d'aluminium,
et dans lequel la composition de revêtement fournit une libération contrôlée de phosphate dans la plage allant d'environ 50 à 500 ppm, de préférence entre environ 100 et 200 ppm, quand elle est appliquée sur le substrat métallique et quand elle est en contact avec de l'eau et de l'oxygène.

2. Composition de revêtement de couche primaire, de couche intermédiaire et/ou de couche de finition selon la revendication 1 dans laquelle la composition de revêtement présente une teneur totale en substances solubles de moins d'environ 1500 ppm, de préférence de moins d'environ 400 ppm, de manière davantage préférée d'environ 100 à 250 ppm.

3. Composition de revêtement de couche primaire, de couche intermédiaire et/ou de couche de finition selon la revendication 1 dans laquelle le polymère liant est choisi dans le groupe constitué par les polymères à base d'eau et à base de solvant et les polymères sans solvant, de préférence dans le groupe constitué par les polyuréthanes, les polyesters, les époxy à base de solvant, les époxy sans solvant, les époxy à base d'eau, les copolymères d'époxy, les acryliques, les copolymères acryliques, les silicones, les copolymères de silicone, les polysiloxanes, les copolymères de polysiloxane, les alkydes et leurs combinaisons.

4. Composition de revêtement de couche primaire, de couche intermédiaire et/ou de couche de finition selon la revendication 1 comprenant en outre un élément choisi dans le groupe constitué par le zinc, le calcium, le strontium, un chromate, un borate, le baryum, le magnésium, et le molybdène.

5. Composition de revêtement de couche primaire, de couche intermédiaire et/ou de couche de finition selon la revendication 1 dans laquelle le phosphate d'aluminium présente un potentiel d'adsorption d'eau allant jusqu'à environ 25 pour cent en poids d'eau.

6. Composition de revêtement de couche primaire, de couche intermédiaire et/ou de couche de finition selon la revendication 1 dans laquelle le phosphate d'aluminium amorphe est un hydroxy phosphate d'aluminium amorphe comprenant des groupes fonctionnels hydroxyle fixés à l'atome d'aluminium, dans laquelle de préférence les groupes fonctionnels hydroxyle comprennent P-OH.

7. Composition de revêtement de couche primaire, de couche intermédiaire et/ou de couche de finition selon la revendication 1 dans laquelle le phosphate d'aluminium amorphe possède une structure chimique comprenant un squelette polymère, et dans laquelle le phosphate d'aluminium amorphe comprend un anion phosphate à la fois à l'intérieur et à l'extérieur du squelette polymère.

8. Utilisation de la composition de revêtement de couche primaire, de couche intermédiaire et/ou de couche de finition telle que définie dans l'une quelconque des revendications 1 à 7, dans un système pour fournir une protection anticorrosion comprenant la composition de revêtement de couche primaire, de couche intermédiaire et/ou de couche de finition appliquée sur un substrat métallique et laissée à durcir pour former un film.

9. Utilisation de la composition de revêtement de couche primaire, de couche intermédiaire et/ou de couche de finition dans le système selon la revendication 8 comprenant un film de passivation intercalé entre la composition de revêtement et une surface du substrat métallique, dans laquelle le film de passivation est un produit réactionnel formé à partir des sels de phosphate de sodium présents dans le phosphate d'aluminium amorphe et du substrat métallique.

10. Utilisation de la composition de revêtement de couche primaire, de couche intermédiaire et/ou de couche de finition dans le système selon la revendication 8 dans laquelle les groupes hydroxyle de l'hydroxy phosphate d'aluminium amorphe sont liés à des groupes appropriés du polymère liant pour fournir une stabilité de matrice et une amélioration de la barrière contre l'humidité à la composition de revêtement, dans laquelle le polymère liant est choisi de préférence dans le groupe constitué par les polyuréthanes, les polyesters, les époxy à base de solvant, les époxy sans solvant, les époxy à base d'eau, les copolymères d'époxy, les acryliques, les copolymères acryliques, les silicones, les copolymères de silicone, les polysiloxanes, les copolymères de polysiloxane, les alkydes et leurs combinaisons.

11. Utilisation de la composition de revêtement de couche primaire, de couche intermédiaire et/ou de couche de finition dans le système selon la revendication 8 dans laquelle le phosphate d'aluminium amorphe est un orthophosphate.

12. Utilisation de la composition de revêtement de couche primaire, de couche intermédiaire et/ou de couche de finition dans le système selon la revendication 8 dans laquelle la composition de revêtement est un revêtement primaire disposé sur le substrat métallique ou un revêtement de couche intermédiaire ou de couche de finition qui est disposé sur le substrat métallique ou une couche primaire disposée sur le substrat métallique.

13. Composition de revêtement de couche primaire, de couche intermédiaire et/ou de couche de finition selon la revendication 1, ou composition de revêtement anticorrosion telle que définie dans la revendication 1, dans laquelle le phosphate d'aluminium amorphe présente une taille de particule de moins d'environ 20 microns, et de préférence située dans la plage allant d'environ 0,5 à 10 microns, et de manière davantage préférée dans la plage allant d'environ 1,0 à 8,0 microns.

14. Composition de revêtement de couche primaire, de couche intermédiaire et/ou de couche de finition selon la revendication 1, ou composition de revêtement anticorrosion telle que définie dans la revendication 1, dans laquelle le phosphate d'aluminium amorphe est un hydroxy phosphate d'aluminium amorphe présentant des répartitions granulométriques D50 allant d'environ 0,5 à 8 microns, de préférence dans laquelle l'hydroxy phosphate d'aluminium amorphe présente une répartition granulométrique D50 d'environ 1 micron et D90 inférieure environ 4 microns et présente un rapport p : Al d'environ 0,9 à 1.

15. Composition de revêtement de couche primaire, de couche intermédiaire et/ou de couche de finition selon la revendication 1, ou composition de revêtement anticorrosion telle que définie dans la revendication 1, dans laquelle le phosphate d'aluminium amorphe présente une surface (telle que mesurée par un procédé BET) de plus de 20 m²/g, mais de moins d'environ 80 m²/g, de préférence dans laquelle la surface est située dans la plage allant d'environ 20 à 60 m²/g, et de manière davantage préférée dans la plage allant d'environ 20 à 30 m²/g.

16. Composition de revêtement anticorrosion comprenant :
un polymère liant choisi dans le groupe constitué par les polymères à base de solvant, les polymères à base d'eau et leurs combinaisons ;
un pigment inhibant la corrosion de type orthophosphate d'aluminium sous la forme de particules dispersées dans le polymère liant, l'orthophosphate d'aluminium comprenant un orthophosphate d'aluminium amorphe formé par la combinaison de l'acide phosphorique, de l'hydroxyde d'aluminium et de l'aluminate de sodium et présentant une surface BET située entre environ 20 et 60 m²/g ;
dans laquelle la composition de revêtement comprend dans la plage allant d'environ 1 à 25 pour cent en poids d'orthophosphate d'aluminium, dans laquelle la composition de revêtement fournit une distribution contrôlée d'anions phosphate dans la plage allant d'environ 50 à 500 ppm quand elle est appliquée sur un substrat métallique et quand elle est en contact avec de l'eau et de l'oxygène, dans laquelle les anions phosphate réagissent avec une espèce de fer du substrat métallique pour former dessus un film de passivation qui protège le substrat métallique contre la corrosion, dans laquelle la composition de revêtement présente une teneur totale en substances solubles de moins d'environ 1500 ppm, et dans laquelle la composition de revêtement comprend en outre un matériau comprenant du zinc.
